# EUROPEAN PATENT APPLICATION

(11) **EP 3 706 420 A1**
(43) Date of publication of application: **09.09.2020**
(21) Application number: 18873854.6
(22) Date of filing: 05.09.2018
(51) Int. Cl.: H04N 19/523

(54) **VIDEO IMAGE PROCESSING METHOD AND DEVICE**

(30) Priority: 31.10.2017 CN 201711050289
(71) Applicant: TENCENT TECHNOLOGY (SHENZHEN) COMPANY LIMITED, Shenzhen, Guangdong 518057 (CN)
(72) Inventor: ZHANG, Hongshun, Nanshan District, Shenzhen, Guangdong 518057 (CN)
(74) Representative: Eisenführ Speiser
(86) International application number: PCT/CN2018/104073
(87) International publication number: WO 2019/085636

(57) **Abstract**

Disclosed in embodiments of the present disclosure are a method and a device for processing a video image, which improves the encoding speed and reduces the computational complexity in the case of ensuring video compression performance. The method comprises: performing integer pixel motion estimation on the target image frame to obtain an optimal position estimated by the integer pixel; performing a one-half pixel estimation on the optimal position estimated by the integer pixel to obtain an optimal position estimated by the one-half pixel; dividing the surrounding area of the optimal position estimated by the one-half pixel into four partitions; determining a first partition used for a quarter-pixel estimation from four partitions on the basis of rate-distortion costs corresponding to four one-half pixel positions adjacent to the optimal position estimated by the one-half pixel; performing the quarter-pixel estimation in the first partition according to the optimal position estimated by the one-half pixel, to obtain the optimal position estimated by the quarter-pixel; and using the optimal position estimated by the quarter-pixel as a motion estimation result for motion compensation.

## Description

### RELATED APPLICATION

This application claims priority to Chinese Patent Application No. 201711050289.8, entitled "METHOD FOR PROCESSING VIDEO IMAGE AND APPARATUS" filed with China National Intellectual Property Administration on October 31, 2017, which is incorporated by reference in its entirety.

### FIELD OF THE TECHNOLOGY

The present disclosure relates to the field of computer technologies, and in particular, to video image processing.

### BACKGROUND OF THE DISCLOSURE

Video compression technology develops rapidly at present. A development trend for future video is for high definition, high frame rate, and high compression rate. Common H.264 compression framework is subject to some limitations in compression principles, and cannot meet future demands. Therefore, the high efficiency video coding (HEVC) protocol emerges on requirement. For example, an H.264 encoding unit can merely apply a block size of 16x16, and an HEVC encoding unit can apply multiple block sizes such as 128x128, 64x64, and 8x8. In addition, there are nine intra-frame prediction directions for the H.264 encoding unit, and there can be 35 intra-frame prediction methods for the HEVC encoding unit. Moreover, for inter-frame segmentation, the H.264 encoding unit can merely apply a manner of rectangular segmentation manner, and the HEVC encoding unit can further apply a manner of asymmetric segmentation. An overall compression rate may be improved by 40% by the HEVC encoding unit in comparison with the H.264 encoding unit.

In conventional HEVC coding, it is necessary to first perform interpolation based on an integer pixel, in order to obtain a reference pixel at a corresponding location. Therefore, a quantity of times of interpolation is large, in a case that there is a large quantity of pixels to be matched. Therefore, the HEVC encoding protocol requires a high performance on a machine, and a common machine is not capable to encode in real time. Hence, video compression performance is inevitably reduced.

### SUMMARY

In view of the above, a method, an apparatus, and a server for data processing are provided according to embodiments of the present disclosure, so as to improve processing efficiency of user asset status excavation.

To achieve the foregoing objective, the embodiments of the present disclosure provide the following technical solutions.

According to one aspect, a method for processing a video image is provided according to an embodiment of the present disclosure, including:
obtaining a target image frame from a to-be-encoded video image;
performing integer motion estimation on the target image frame, to obtain an optimal location obtained through the integer pixel estimation;
performing half pixel estimation on the optimal location obtained through the integer pixel estimation, to obtain an optimal location obtained through the half pixel estimation;
dividing a peripheral region of the optimal location obtained through the half pixel estimation into four partitions, where each partition includes two quarter pixel locations obtained through quarter interpolation;
selecting a location corresponding to a smallest rate distortion cost from half pixel locations in the four partitions, and determining that one of the four partitions to which the location corresponding to the smallest rate distortion cost belongs is a first partition;
performing quarter pixel estimation in the first partition based on the optimal location obtained through the half pixel estimation, to obtain an optimal location obtained through the quarter pixel estimation ; and
performing motion compensation by using the optimal location obtained through the quarter pixel estimation as a motion estimation result.

According to another aspect, an apparatus for processing video image is further provided according to an embodiment of the present disclosure, including:
an image obtaining module, configured to obtain a target image frame from a to-be-encoded video image;
an integer pixel estimation module, configured to perform integer motion estimation on the target image frame, to obtain an optimal location obtained through the integer pixel estimation;
a first fractional-pixel estimation module, configured to perform half pixel estimation on the optimal location obtained through the integer pixel estimation, to obtain an optimal location obtained through the half pixel estimation;
an image dividing module, configured to divide a peripheral region of the optimal location obtained through the half pixel estimation into four partitions, each partition including two quarter pixel locations obtained through quarter interpolation;
a first partition obtaining module, configured to select a location corresponding to a smallest rate distortion cost from half pixel locations in the four partitions, and determine that one of the four partitions to which the location corresponding to the smallest rate distortion cost belongs is a first partition;
a second fractional-pixel estimation module, configured to perform quarter pixel estimation in the first partition based on the optimal location obtained through the half pixel estimation, to obtain an optimal location obtained through the quarter pixel estimation; and
a motion compensation module, configured to perform motion compensation by using the optimal location obtained through the quarter pixel estimation as a motion estimation result.

According to still another aspect, a device for video processing is provided according to an embodiment of the present disclosure, including:
a processor, a communications interface, a memory, and a communications bus,
where the processor, the communications interface, and the memory communicates with each other through the communications bus, and the communications interface is an interface of a communications module;
where the memory is configured to store a program code and transmit the program code to the processor; and
where the processor is configured to call an instruction of the program code in the memory to perform the method according to the first aspect.

According to yet another aspect, a storage medium is provided according to an embodiment of the present disclosure, where the storage medium is configured to store a program code, and the program code is for performing the method according to the first aspect.

According to still yet another aspect, a computer program product including instructions is provided according to an embodiment of the present disclosure, where the computer program product when run on a computer configures the computer to perform the method according to the first aspect.

According to the foregoing technical solutions, it can be learned that the embodiments of the present disclosure have the following advantages.

According to the embodiments of the present disclosure, the quarter pixel estimation is completed in the first partition based on the optimal location obtained through the half pixel estimation, and the first partition is the partition to which the location corresponding to the smallest rate distortion cost belongs. Therefore, it is not necessary to perform the quarter interpolation in all regions the quarter pixel estimation, and it is not necessary to calculate the smallest rate distortion cost of each quarter pixel location in all the regions. Rather, the smallest rate distortion cost is merely required to be calculated for the quarter pixel locations in the first partition. Therefore, an encoding speed can be effectively improved and calculation complexity can be reduced while ensuring video compression performance, and thereby a requirement of real-time encoding on machine performances is lowered in video compression.

### BRIEF DESCRIPTION OF THE DRAWINGS

For clearer illustration of the technical solutions according to embodiments of the present disclosure or conventional techniques, hereinafter are briefly described the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic flowchart of a method for processing video image according to an embodiment of the present invention;
Figure 2 is a schematic structural diagram of an HEVC encoding framework according to an embodiment of the present disclosure;
Figure 3-a is a schematic diagram of identifiers of a relationship between a central point location and surrounding locations in a process of half pixel estimation according to an embodiment of the present disclosure;

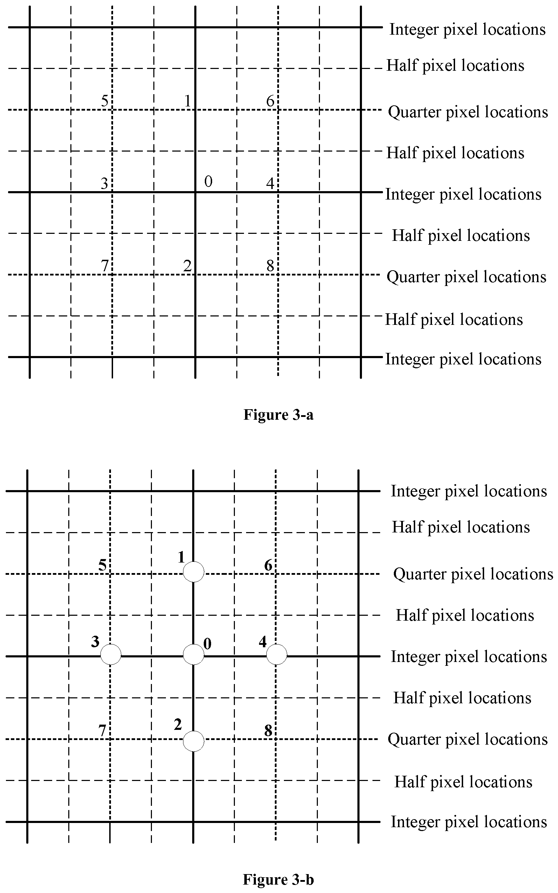

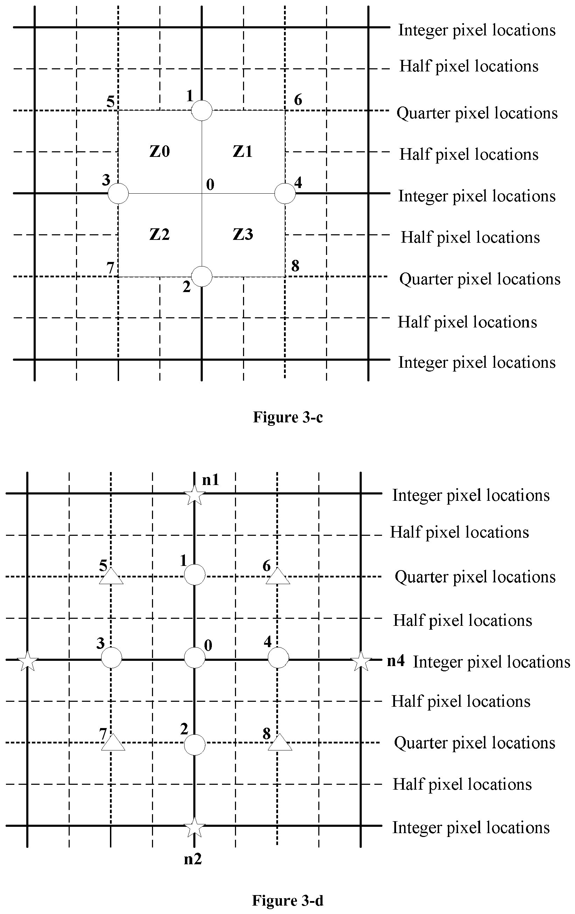

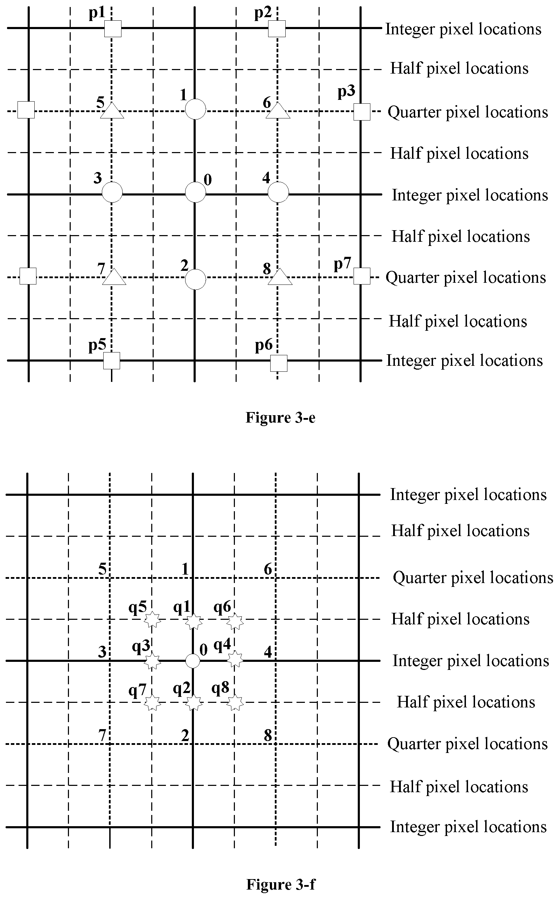

Figure 3-b is a schematic diagram of identifiers of locations of calculation points in a process of half pixel estimation according to an embodiment of the present disclosure;
Figure 3-c is a schematic diagram of identifiers of four blocks of partitions in a case that a central point location is an optimal location according to an embodiment of the present disclosure;
Figure 3-d is a schematic diagram of identifiers of supplemental point location in a case that an optimal location in process of a half pixel estimation is a location of one of first four points according to an embodiment of the present disclosure;
Figure 3-e is a schematic diagram of identifiers of supplemental point location in a case that an optimal location in a process of half pixel estimation is not a location of one of first four points according to an embodiment of the present disclosure;
Figure 3-f is a schematic diagram of identifiers of a relationship between a central point location and surrounding locations before quarter pixel estimation according to an embodiment of the present disclosure;

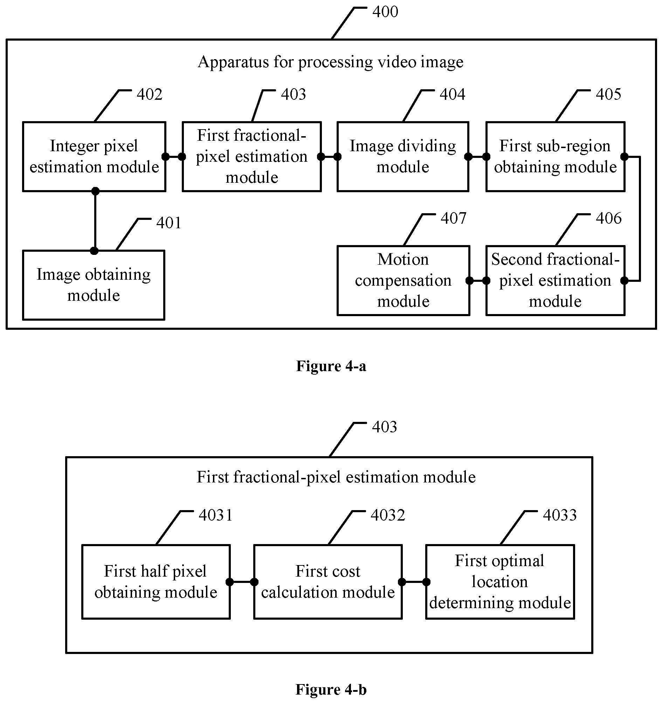

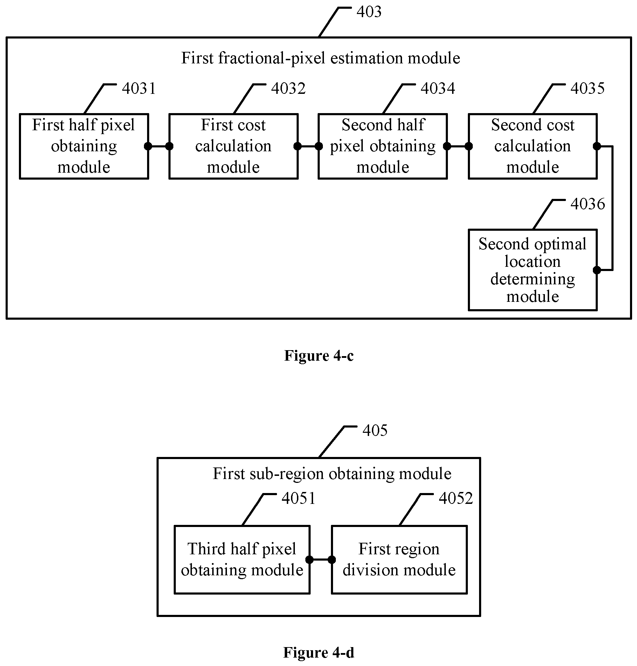

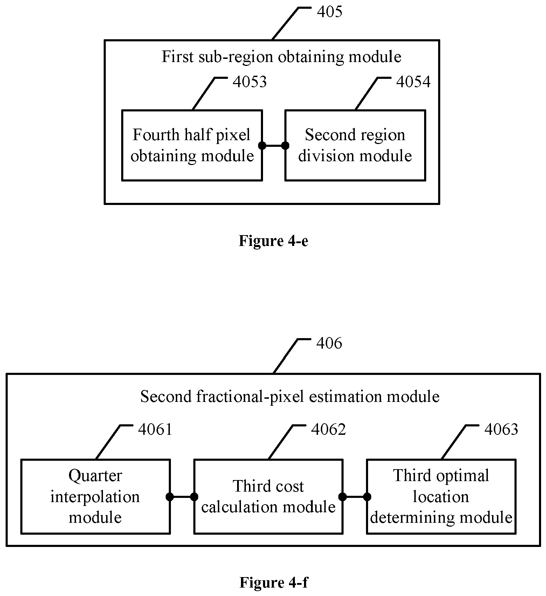

Figure 4-a is a schematic structural diagram of an apparatus for processing video image according to an embodiment of the present disclosure;
Figure 4-b is a schematic structural diagram of a first fractional-pixel estimation module according to an embodiment of the present disclosure;
Figure 4-c is a schematic structural diagram of another first fractional-pixel estimation module according to an embodiment of the present disclosure;
Figure 4-d is a schematic structural diagram of a first partition obtaining module according to an embodiment of the present disclosure;
Figure 4-e is a schematic structural diagram of another first partition obtaining module according to an embodiment of the present disclosure;
Figure 4-f is a schematic structural diagram of a second fractional-pixel estimation module according to an embodiment of the present disclosure; and

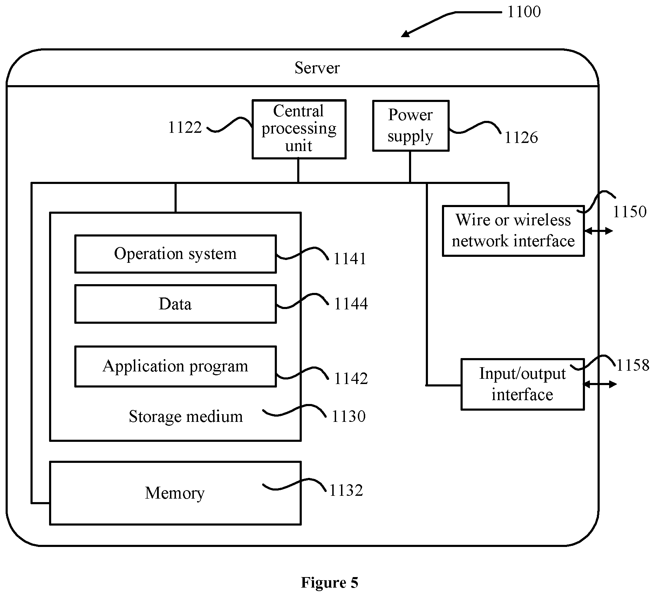

Figure 5 is a schematic structural diagram of a server to which a method for processing video image is applied according to an embodiment of the present disclosure.

### DESCRIPTION OF EMBODIMENTS

A method and an apparatus for processing video image are provided according to embodiments of the present disclosure, so as to improve an encoding speed and lower calculation complexity while ensuring video compression performances.

To make the object, technical solutions and advantages of the present application clearer, the technical solutions according to the embodiments of the present application will be described clearly and completely as follows in conjunction with the drawings in the embodiments of the present application. It is apparent that the described embodiments are only a part of the embodiments according to the present application, rather than all the embodiments. Any other embodiments obtained by those skilled in the art based on the embodiments in the present application without any creative efforts fall within the protection scope of the present application.

The terms "include", "contain" and any other variants thereof in the specification, claims, and accompanying drawings of the present disclosure are intended to cover a non-exclusive inclusion, so that a process, a method, a system, a product, or a device that includes a series of units is not necessarily limited to those units, but may include other units not expressly listed or inherent to such a process, method, product, or device.

Hereinafter detailed descriptions are provided.

A method for processing a video image according to an embodiment of the present disclosure may be applied to a video processing device. The video processing device may be a central processing unit (CPU) or a graphic processing unit (GPU) having a video processing capability. Optionally, the video processing device may be selected from terminals such as a mobile phone and a notebook terminal, or may be selected as a server.

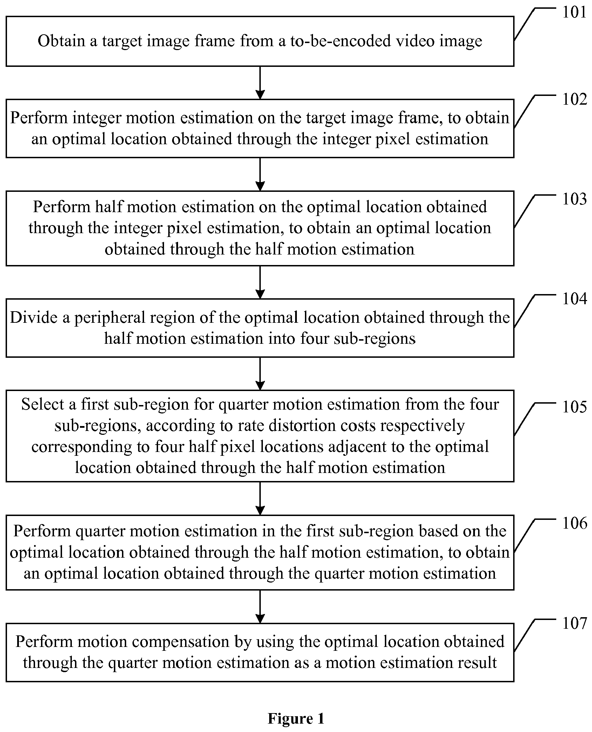

An embodiment of the method for processing video image in the present disclosure may be specifically applied to fast fractional pixel motion estimation and motion compensation. For example, in HEVC coding according to an embodiment of the present disclosure, motion estimation (ME) may include the following three components: integer motion estimation, half motion estimation (HME), and quarter motion estimation (QME). In the HME and the QME, since an image has a resolution of an integer pixel, each pixel needs to be first magnified by four times to improve a compression rate before searching for an optimal matching location. Magnification of twice is needed for an image in HME, and magnification of four times is needed for an image in QME. Since such data does not exist, it is necessary to first perform interpolation based on integer pixels, so as to obtain a reference pixel at a corresponding location. According to embodiments of the present disclosure, half pixel estimation and quarter pixel estimation are not independent from each other. Rather, the quarter pixel estimation is performed after a range for interpolation is reduced based on the half pixel estimation. Thereby, an encoding speed is improved, and calculation complexity is lowered. Referring to Figure 1, a method for processing video image is provided by an embodiment of the present disclosure, and the method may include steps 101 to 107.

In step 101, a target image frame is obtained from a to-be-encoded video image.

In one embodiment of the present disclosure, motion estimation may be performed on an image frame based on an HEVC encoding framework. A target image frame is first extracted. For example, the target image frame may be read from a frame buffer. The frame buffer is a display buffer, and writing a particular format of data into the display buffer means outputting content to a screen. The frame buffer may be located at any location of a system memory (an internal memory), and a video controller refreshes a screen by accessing the frame buffer. The frame buffer has an address in the internal memory.

In step 102, integer motion estimation is performed on the target image frame, to obtain an optimal location obtained through the integer pixel estimation.

In one embodiment of the present disclosure, the integer motion estimation may be performed on the target image frame after the target image frame is extracted, so as to obtain the optimal location obtained through the integer pixel estimation. The optimal location is an integer pixel location that is selected from multiple integer pixel locations and has a smallest rate distortion cost among the multiple integer pixel locations. A rate distortion cost corresponding to each integer pixel location needs to be calculated in a process of the integer pixel estimation. The integer pixel location corresponding to the smallest rate distortion cost is the optimal location obtained through the integer pixel estimation.

In step 103, half pixel estimation is performed on the optimal location obtained through the integer pixel estimation, to obtain an optimal location obtained through the half pixel estimation.

In one embodiment of the present disclosure, the half pixel estimation is performed on the optimal location obtained through the integer pixel estimation in the target frame after the integer motion estimation is completed in step 102, so as to obtain the optimal location obtained through the half pixel estimation. The optimal location is a half pixel location that is selected from multiple half pixel locations and has a smallest rate distortion cost value among the multiple half pixel locations. A rate distortion cost corresponding to each half pixel location needs to be calculated in a process of the half pixel estimation. The half pixel location corresponding to the smallest rate distortion cost is the optimal location obtained through the half pixel estimation.

In some embodiments of the present disclosure, four location points may be selected for half interpolation, so as to reduce a calculation amount due to the half interpolation. Specifically, the step 103 in which the half pixel estimation is performed on the optimal location obtained through the integer pixel estimation, to obtain an optimal location obtained through the half pixel estimation, includes steps A1 to A3.

In step A1, four half pixel locations adjacent to the optimal location obtained through the integer pixel estimation are obtained. The four half pixel locations are four pixel locations that are directly above, directly below, directly on left of, and directly on right of the optimal location obtained through the integer pixel estimation.

In step A2, a location corresponding to a first smallest rate distortion cost is selected from the optimal location obtained through the integer pixel estimation and the four half pixel locations.

In step A3, the optimal location obtained through the half pixel estimation is determined to be the optimal location obtained through the integer pixel estimation, in a case that the location corresponding to the first smallest rate distortion cost is the optimal location obtained through the integer pixel estimation.

In the aforementioned steps A1 to A3, it is first taken as an example that the optimal location obtained through the integer pixel estimation is a central point location in the half pixel estimation. The four pixel locations may be determined directly above, directly below, directly on left of, and directly on right of the optimal location obtained through the integer pixel estimation, and thereby a result of the half interpolation of four surrounding locations, performed on the optimal location obtained through the integer pixel estimation, may be obtained. The interpolation result is analyzed, to obtain the four half pixel locations adjacent to the optimal location obtained through the integer pixel estimation. The half interpolation refers to that a half pixel location is obtained by interpolation with respect to the optimal location obtained through the integer pixel estimation. In the step A2, rate distortion costs at the following five pixel locations need to be calculated: the optimal location obtained through the integer pixel estimation, and the four half pixel locations. A location corresponding to the smallest rate distortion cost is selected among the five rate distortion costs that are calculated. Since in one embodiment of the present disclosure, there are multiple processes of calculating rate distortion costs, the smallest rate distortion cost in the step A2 is defined as the "first smallest rate distortion cost". In the step A3, the case is that the location corresponding to the first smallest rate distortion cost is the optimal location obtained through the integer pixel estimation. Since the four half pixel locations obtained by performing interpolation on the optimal location obtained through the integer pixel estimation have already been obtained in the step A1, the half interpolation on the optimal location obtained through the integer pixel estimation has been completed. The optimal location obtained through the half pixel estimation is the optimal location obtained through the integer pixel estimation.

In some other embodiments of the present disclosure, the step 103 in which the half pixel estimation is performed on the optimal location obtained through the integer pixel estimation, to obtain an optimal location obtained through the half pixel estimation, includes steps A1, A2, A4, A5, and A6 or A7.

In step A1, four half pixel locations adjacent to the optimal location obtained through the integer pixel estimation are obtained. The four half pixel locations are four pixel locations that are directly above, directly below, directly on left of, and directly on right of the optimal location obtained through the integer pixel estimation.

In step A2, a location corresponding to a first smallest rate distortion cost is selected from the optimal location obtained through the integer pixel estimation and the four half pixel locations.

In step A4, two half pixel locations adjacent to a first half pixel location are obtained, in a case that the location corresponding to the first smallest rate distortion cost is the first half pixel location. The two half pixel locations adjacent to the first half pixel location and the first half pixel location are located along a same axial direction, and the first half pixel location is a half pixel location with a smallest rate distortion cost among the four half pixel locations.

In step A5, a location corresponding to a second smallest rate distortion cost is selected from the first half pixel location and the two half pixel locations adjacent to the first half pixel location.

In step A6, the optimal location obtained through the half pixel estimation is determined to be the first half pixel location, in a case that the location corresponding to the second smallest rate distortion cost is the first half pixel location.

In step A7, the optimal location obtained through the half pixel estimation is determined to be a third half pixel location, in a case that the location corresponding to the second smallest rate distortion cost is the third half pixel location. The third half pixel location is a half pixel location with a smaller rate distortion cost among the two half pixel locations adjacent to the first half pixel location.

In the steps A1 to A7, the four pixel locations may be determined directly above, directly below, directly on left of, and directly on right of the optimal location obtained through the integer pixel estimation, and thereby a result of half interpolation of four surrounding locations, performed on the optimal location obtained through the integer pixel estimation, is obtained. The result of the half interpolation is analyzed, to obtain the four half pixel locations adjacent to the optimal location obtained through the integer pixel estimation. The half interpolation means that a half pixel location is obtained by performing interpolation on the optimal location obtained through the integer pixel estimation. In the step A2, rate distortion costs of the following five pixel locations need to be calculated: the optimal location obtained through the integer pixel estimation and the four half pixel locations. A location corresponding to the smallest rate distortion cost is selected from the five rate distortion costs. Since in one embodiment of the present disclosure, there are multiple processes of calculating rate distortion costs, the smallest rate distortion cost in the step A2 is defined as the "first smallest rate distortion cost ". In a case that the location corresponding to the first smallest rate distortion cost is not the optimal location obtained through the integer pixel estimation, the steps A4 to A7 may be triggered to be performed, and the optimal location obtained through the half pixel estimation is searched again.

In the step A4, the half pixel location with the smallest rate distortion cost among the four half pixel locations is defined as the "first half pixel location", and the two half pixel locations adjacent to the first half pixel location are obtained. The two half pixel locations adjacent to the first half pixel location and the first half pixel location are located along the same axial direction. Therefore, the two half pixel locations obtained through interpolation and the first half pixel location may be located along an axial direction of a horizontal axis or a longitudinal axis. That is, the two half pixel locations obtained through interpolation are along a horizontal direction with respect to the first half pixel location, or the two half pixel locations obtained through interpolation are along a vertical direction with respect to the first half pixel location. After the result of the half interpolation is obtained in the step A4, rate distortion costs of the following three pixel locations need to be calculated: the first half pixel location, and the two half pixel locations adjacent to the first half pixel location. The location corresponding to the smallest rate distortion cost is selected from the calculated three rate distortion costs. Since in one embodiment of the present disclosure there are multiple of processes of calculating rate distortion costs, the smallest rate distortion cost in the step A5 is defined as the "second smallest rate distortion cost". Then, step A6 or A7 is separately performed according to different locations corresponding to the smallest rate distortion costs.

In step 104, a peripheral region of the optimal location obtained through the half pixel estimation is divided into four partitions.

In one embodiment of the present disclosure, after the optimal location obtained through the half pixel estimation is determined in the step 103, the peripheral region of the optimal location obtained through the half pixel estimation may be divided into four partitions along a horizontal axis direction and a longitudinal axis direction. The optimal location obtained through the half pixel estimation serves as a central point in division. The peripheral region of the optimal location obtained through the half pixel estimation refer to quarter pixel locations in eight directions with respect to the optimal location obtained through the half pixel estimation serving as a central point. The eight directions are upper, lower, left, right, upper left, upper right, lower left, and lower right. It can be learned from the above that the result of the half interpolation may be obtained in a process of half pixel estimation . Therefore, a half pixel location obtained through the half interpolation may be included in each partition.

In some embodiments of the present disclosure, under the foregoing implementation scenario of performing step A1 to step A3, the step 104 in which the peripheral region of the optimal location obtained through the half pixel estimation is divided into the four partitions includes a step B1.

In step Bl, a peripheral region of the optimal location obtained through the integer pixel estimation is divided into the four partitions, in a case that the location corresponding to the first smallest rate distortion cost is the optimal location obtained through the integer pixel estimation. Each partition is obtained from an area defined based on the optimal location obtained through the integer pixel estimation and two of the four half pixel locations.

In a case that the location corresponding to the first smallest rate distortion cost is the optimal location obtained through the integer pixel estimation, it is determined that the optimal location obtained through the half pixel estimation is the optimal location obtained through the integer pixel estimation. The Four partitions may be obtained through division around the optimal location obtained through the integer pixel estimation. In obtaining the result of the half interpolation in the step A1, the four half pixel locations are obtained through interpolation. Therefore, the area may be divided based on two of the four half pixel locations and a first central point region, and the divided area may be defined as an independent partition.

In some embodiments of the present disclosure, under the foregoing implementation scenario of performing step A1, A2, and A4 to A6, the step 104 in which the peripheral region of the optimal location obtained through the half pixel estimation is divided into the four partitions includes steps C1 and C2.

In step C1, a second half pixel location adjacent to the first half pixel location is obtained, in a case that the location corresponding to the second smallest rate distortion cost is the first half pixel location. The second half pixel location is a pixel location on which no half interpolation has been performed, among four pixel locations that are directly above, directly below, directly on left of, and directly on right of the first half pixel location.

In step C2, a peripheral region of the first half pixel location is divided into the four partitions. Each partition is obtained from an area divided based on the first half pixel location, the optimal location obtained through the integer pixel estimation, the two half pixel locations adjacent to the first half pixel location, and the second half pixel location.

In a case that the location corresponding to the second smallest rate distortion cost is the first half pixel location, it is determined that the optimal location obtained through the half pixel estimation is the first half pixel location, and interpolation has been completed on only three of the four pixel locations that are directly above, directly below, directly on left of, and directly on right of the first half pixel location. In such case, the second half pixel location adjacent to the first half pixel location needs to be obtained. Then, the peripheral region of the first half pixel location is divided into the four partitions. In obtaining the result of the half interpolation in the aforementioned steps A4 and C1, the four half pixel locations are obtained through interpolation, which are the optimal location obtained through the integer pixel estimation, the two half pixel locations adjacent to the first half pixel location, and the second half pixel location. An area may be divided based on two of the four half pixel locations and a first central point area, and the divided area may be defined as an independent partition.

In some embodiments of the present disclosure, under the foregoing implementation scenario of performing steps A1, A2, A4, A5 and A7, the step 104 in which the peripheral region of the optimal location obtained through the half pixel estimation is divided into the four partitions includes steps D1 and D2.

In step D1, two fourth half pixel locations adjacent to the third half pixel location are obtained, in a case that the location corresponding to the second smallest rate distortion cost is the third half pixel location. The two fourth half pixel locations are pixel locations on which no interpolation have been performed, among four pixel locations that are directly above, directly below, directly on left of, and directly on right of the third half pixel location.

In step D2, a peripheral region of the third half pixel location is divided into the four partitions. Each partition is obtained from an area divided based on the third half pixel location, two of four half pixel locations that are adjacent to the third half pixel location, and the two fourth half pixel locations.

The half pixel location with the smallest rate distortion cost in the two half pixel locations adjacent to the first half pixel location is defined as "a third half pixel location". In a case that the location corresponding to the second smallest rate distortion cost is the third half pixel location, interpolation has been completed on only two of the four pixel locations that are directly above, directly below, directly on left of, and directly on right of the third half pixel location. In such case, the two fourth half pixel locations adjacent to the third half pixel location need to be obtained. Then, the peripheral region of the third half pixel location is divided into the four partitions. In the step A4, in obtaining the result of the half interpolation in the step D1, the four half pixel locations are obtained through interpolation, which are two of the four half pixel locations that are adjacent to the third half pixel location and the two fourth half pixel locations. An area may be divided based on the two of the four half pixel locations and the first central point area, and the divided area may be defined as an independent partition.

In step 105, a first partition for quarter pixel estimation is determined from the four partitions, based on rate distortion costs respectively corresponding to four half pixel locations adjacent to the optimal location obtained through the half pixel estimation.

In one embodiment of the present disclosure, the peripheral region of the optimal location obtained through the half pixel estimation is divided into four partitions in the step 104. Each partition includes two quarter pixel locations obtained through quarter interpolation. Therefore, each of the four partitions includes two quarter pixel locations. A rate distortion cost may be calculated for each half pixel location in the four partitions. A smallest rate distortion cost is selected from the four rate distortion costs. The partition to which the location corresponding to the smallest rate distortion cost belongs is the first partition. In this embodiment of the present disclosure, after quarter pixel estimation is determined according to costs of four surrounding pixels in the half pixel estimation, interpolation is required to be performed only on a location point in the first partition. Therefore, an interpolation range for the quarter pixel estimation is greatly reduced. Therefore, an encoding speed can be improved, and calculation complexity can be lowered.

In some embodiments of the present disclosure, the step 105 in which the first partition for quarter pixel estimation is determined from the four partitions, based on rate distortion costs respectively corresponding to four half pixel locations adjacent to the optimal location obtained through the half pixel estimation, includes following steps.

Four half pixel locations that are directly above, directly below, directly on left of, and directly on right of the optimal location obtained through the half pixel estimation are determined as the four half pixel locations adjacent to the optimal location obtained through the half pixel estimation.

Rate distortion costs corresponding to the four half pixel locations adjacent to the optimal location obtained through the half pixel estimation are calculated.

The first partition is determined according to a relationship between magnitude of a rate distortion cost corresponding to a half pixel location directly above the optimal location and magnitude of a rate distortion cost corresponding to a half pixel location directly below the optimal location, and a relationship between magnitude of a rate distortion cost corresponding to a half pixel location directly on left of the optimal location and magnitude of a rate distortion cost corresponding to a half pixel location directly on right of the optimal location.

Hereinafter an example is provided for illustration. The peripheral region of the optimal location obtained through the half pixel estimation is divided into: an upper right area, an upper left area, a lower right area, and a lower left area. The rate distortion costs respectively corresponding to the half pixel location directly above the optimal location and the half pixel location directly below the optimal location are compared in value, and the rate distortion costs respectively corresponding to the half pixel location directly on left of the optimal location and the half pixel location directly on right of the optimal location are compared in value. It is determined that the first partition is the upper left area, in a case that the rate distortion cost corresponding to the half pixel location directly above the optimal location is less than or equal to the rate distortion cost corresponding to the half pixel location directly below the optimal location, and the rate distortion cost corresponding to the half pixel location directly on left of the optimal location is less than or equal to the rate distortion cost corresponding to the half pixel location directly on right of the optimal location. It is determined that the first partition is the upper right area, in a case that the rate distortion cost corresponding to the half pixel location directly above the optimal location is less than or equal to the rate distortion cost corresponding to the half pixel location directly below the optimal location, and the rate distortion cost corresponding to the half pixel location directly on left of the optimal location is greater than the rate distortion cost corresponding to the half pixel location directly on right of the optimal location. It is determined that the first partition is the lower left area, in a case that the rate distortion cost corresponding to the half pixel location directly above the optimal location is greater than the rate distortion cost corresponding to the half pixel location directly below the optimal location, and the rate distortion cost corresponding to the half pixel location directly on left of the optimal location is less than or equal to the rate distortion cost corresponding to the half pixel location directly on right of the optimal location. It is determined that the first partition is the lower right area, in a case that the rate distortion cost corresponding to the half pixel location directly above the optimal location is greater than the rate distortion cost corresponding to the half pixel location directly below the optimal location, and the rate distortion cost corresponding to the half pixel location directly on left of the optimal location is greater than the rate distortion cost corresponding to the half pixel location directly on right of the optimal location.

In step 106, quarter pixel estimation is performed in the first partition based on the optimal location obtained through the half pixel estimation, to obtain an optimal location obtained through the quarter pixel estimation.

In one embodiment of the present disclosure, calculated in the foregoing steps are the optimal location obtained through the half pixel estimation, and the first partition to which the location corresponding to the smallest rate distortion cost belongs. Therefore, when QME is performed in HEVC coding, the QME is required to be performed only in the first partition rather than in all areas. Therefore, an interpolation range of the quarter pixel estimation is greatly reduced. An encoding speed can be improved, and calculation complexity can be lowered.

In some embodiments of the present disclosure, the step 106 in which the quarter pixel estimation is performed in the first partition based on the optimal location obtained through the half pixel estimation, to obtain the optimal location obtained through the quarter pixel estimation includes steps E1 to E3.
In step E1, quarter interpolation is performed at three surrounding locations in the first partition, based on the optimal location obtained through the half pixel estimation, to obtain three quarter pixel locations adjacent to the optimal location obtained through the half pixel estimation. The three quarter pixel locations are located in the first partition.
In step E2, a location corresponding to a third smallest rate distortion cost is selected from the optimal location obtained through the half pixel estimation and the three quarter pixel locations.
In step E3, the location corresponding to the third smallest rate distortion cost is determined to be the optimal location obtained through the quarter pixel estimation.

Under the foregoing implementation scenario of steps E1 to E3, quarter interpolation at only three surrounding locations is required to be performed in the first partition, to obtain the three quarter pixel locations adjacent to the optimal location obtained through the half pixel estimation. The three quarter pixel locations are located in the first partition. After the quarter interpolation is completed in the step E1, rate distortion costs of four pixel locations are required to be calculated, which are the optimal location obtained through the half pixel estimation and the three quarter pixel locations. The location corresponding to the smallest rate distortion cost is selected from the calculated four rate distortion costs. Since in one embodiment of the present disclosure, there are multiple processes of calculating rate distortion costs, the smallest rate distortion cost in the step E2 is defined as the "third smallest rate distortion cost". Afterwards, the location corresponding to the third smallest rate distortion cost can serve as the optimal location obtained through the quarter pixel estimation.

In step 107, motion compensation is performed by using the optimal location obtained through the quarter pixel estimation as a motion estimation result.

In one embodiment of the present disclosure, the motion compensation may be performed based on the optimal location obtained through the quarter pixel estimation after the optimal location obtained through the quarter pixel estimation is obtained in the step 106. A manner of the motion compensation may refer to related technology. Details are not described herein. After the motion compensation is completed, prediction encoding may be performed. Spatial correlation and temporal correlation of a video are mainly used to remove time-space domain redundancy information by means of intra-frame prediction and inter-frame prediction, so as to obtain a prediction image block. Then, a difference between the prediction image block and an original image block is obtained, to obtain a prediction residual block. Afterwards, discrete cosine transform (DCT) and quantization are performed on the prediction residual, to obtain a quantized DCT coefficient. Finally, entropy encoding is performed on the quantized DCT coefficient, to obtain a compressed bit stream.

It can be learned from description of the foregoing embodiments of the present disclosure that the quarter pixel estimation in the embodiments of the present disclosure is completed in the first partition according to the optimal location obtained through the half pixel estimation, and the first partition is a partition to which a location corresponding to the smallest rate distortion cost belongs. Therefore, it is not necessary to perform the quarter interpolation in all regions during the quarter pixel estimation, and it is not necessary to calculate a smallest rate distortion cost of each quarter pixel location in all the regions. Rather, the smallest rate distortion cost is merely required to be calculated for the quarter pixel locations in the first partition. Therefore, an encoding speed can be effectively improved and calculation complexity can be reduced while ensuring video compression performance, and thereby a requirement of real-time encoding on machine performances is lowered in video compression.

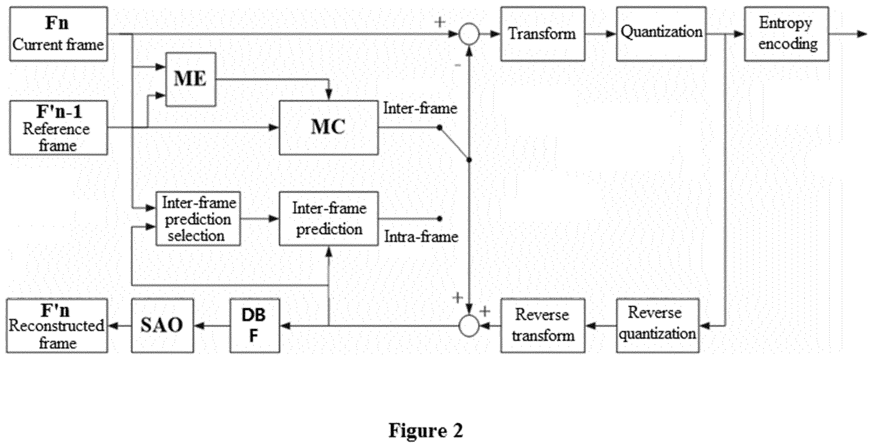

Shown in Figure 2 is a schematic structural diagram of an HEVC encoding framework according to an embodiment of the present disclosure. First, an HEVC encoding process is described in detail. A frame of image is read from the frame buffer and then sent to an encoder. Intra-frame or inter-frame prediction is performed, and then a prediction value is obtained. Intra-frame prediction is that a predicted pixel is obtained through interpolation with reference to a surrounding pixel, and information in spatial domain is referred to. Inter-frame prediction is that a location matching a target block most is found from a reference frame, and information in temporal domain is referred to. The inter-frame prediction may include motion estimation (ME) and motion compensation (MC). After the prediction value is obtained, a difference between the prediction value and input data is obtained, to obtain a residue. Then, discrete cosine transform (DCT) transform and quantization are performed, to obtain a residual coefficient. Afterwards, the residual coefficient is sent into an entropy encoding module, to output a bit stream. In addition, after inverse quantization and inverse transform are performed on the residual coefficient, a residual value for a reconstructed image is obtained, and the residual value and an intra-frame or inter-frame prediction value are added to obtain a reconstructed image. The reconstructed image enters a reference frame queue after in-loop filtering, and serves as a next frame of the reference image, so that encoding is performed frame after frame. The in-loop filtering may include deblocking filter (DBF) and sample adaptive offset (SAO).

In the HEVC coding, a calculation amount is large because segmentation is finer and there are more provided directions. It is necessary to optimize a whole encoder in order to achieve high compression performances. Generally, entropy encoding in inter-frame prediction and inter-frame parts makes approximately 90% of the whole calculation amount, entropy encoding of intra-frame prediction and intra-frame parts makes 8%, and SAO and DB makes less than 1% in total. The ME part makes 30% to 40% of the whole calculation mount, and such proportion grows with other parts being optimized.

The ME includes three parts: integer motion estimation, half pixel estimation (HME), and quarter pixel estimation (QME).

A solution of reducing a quantity of motion estimation points while not lowering compression performances is provided according to an embodiment of the present disclosure, so as to improve an encoding speed and reduce complexity of calculation. Thereby, a requirement of real-time encoding on a machine is lowered in video compression.

In one embodiment of the present disclosure, the following three parts are included: encoder architecture adjustment, HME optimization, and QHE optimization. First, an interpolation part that is necessary during fractional-pixel motion estimation is immediately performed after reconstruction data for a target block is processed through DB and SAO. Reference pixels corresponding to all locations of half pixels and reference pixels at two locations in a quarter horizontal direction are obtained through interpolation. Then, half pixel estimation for inter-frame prediction is performed directly based on an mv value, and whether interpolation is performed is determined based on an mv status in quarter pixel estimation. Thereby, repeated interpolation is avoided. In addition, which areas location points operated during the quarter pixel estimation are in is determined according to costs of four surrounding pixels in the half pixel estimation, and only three points are performed during the final quarter pixel estimation to achieve compression performance for original eight points. Moreover, a completed location supplementation strategy is designed during the half pixel estimation. Four points are operated first. Then, it is determined whether the process ends or other location points are supplemented.

In an encoder architecture shown in Figure 2, after completing encoding all coding tree units (CTU) of an entire frame, DB of the entire frame is performed. Then, SAO of the entire frame is performed. Finally, a reference frame queue is entered. During fractional-pixel motion estimation, no reference pixel exists, and the interpolation is performed according to mv coordinates in real time, namely, in a manner of "interpolate-and-operate". Interpolation is performed on a location on requirement, and then an optimal mv location is obtained through calculation and comparison.

In one embodiment of the present disclosure, the interpolation is processed after SAO, and thereby following adjustment is made. After a CTU is encoded, DB and SAO start to be performed immediately, and then all reference pixels at half pixel locations are obtained through interpolation. The interpolation is performed with a CTU block as a unit, and each location corresponding to a piece of image buffer. In application, the image buffer is selected according to the half pixel location of the mv, offsetting to a corresponding location. In addition, two surfaces in a quarter pixel horizontal direction are obtained through interpolation. In a case that a quarter pixel location of the mv is not a location in the horizontal direction on which interpolation has been performed, interpolation is performed in real time.

Hereinafter a process of optimizing HME is described according to one embodiment of the present disclosure. Shown in Figure 3-a are locations of a central point and eight surrounding points. Specifically, three types of pixel locations may be included, which are integer pixel locations represented by solid lines, half pixel locations represented by dotted lines, and quarter pixel locations represented by dashed lines.

Half pixel estimation has been performed through interpolation in advance. In application, the estimation is selected according to corresponding coordinates of the mv, and a location at which an optimal mv is located is determined based on costs. For example, a rate distortion cost may be used for selecting the best among options, and a corresponding value is referred to as a cost for short. The mv corresponding to a smallest cost is an optimal mv, and the cost is obtained by the following formula: cost = satd + lamda^{∗}bit, where bit presents bits corresponding to (mv-mvp).

SATD stands for a sum of absolute transformed difference. Obtaining a sum of absolute values after hadamard transform is a manner for calculating distortion. A residual signal is subject to the hadamard transform, and then a sum of absolute values of element is obtained, which has higher accuracy for calculation amount in comparison with SAD. Lamda is a Lagrange constant, mvp stands for motion vector prediction, of which a value is required to be deduced according to a protocol. In actual coding, it is mvd that is encoded, that is, mvd=mv-mvp. In such case, code elements may be saved.

The Half pixel estimation mainly includes the following steps 1 to 5.

In step 1, costs of a central point and four locations, i.e. up, down, left, and right, are calculated. Namely, costs of locations 0, 1, 2, 3, and 4 are calculated. Such locations are where circles are located in Figure 3-b.

By comparing values of the costs, a smallest cost and a location corresponding to the smallest cost are found.

In step 2, in a case that the smallest cost is at the central point, i.e. location 0, the HME ends, costs corresponding to locations 1 and 2 are compared, costs corresponding to locations 3 and 4 are compared, and a region encircled by locations 5, 6, 7, and 8 is divided into four partitions by using the central location as an original point of coordinates. The division is according to the following table, as shown in Table 1.

| Cost 1 is less than or equal to cost 2 | Cost 3 is less than or equal to cost 4 | Partition |
|---|---|---|
| Yes | Yes | 0 |
| Yes | No | 1 |
| No | Yes | 2 |
| No | No | 3 |

As shown in Figure 3-c, the four partitions correspond to Z0, Z1, Z2, and Z3. Three specific points for the quarter pixel estimation is performed may be indicated by the partitions. In view of probability, all points are calculated as long as the three points are calculated. A quantity of points for the quarter pixel estimation is reduced, and an encoding speed is improved.

In a case that a location corresponding to the smallest cost is not at the central point, the process goes to step 3.

In step 3, two locations are first supplemented according to a target optimal location (that is, a location corresponding to a smallest cost is obtained after calculation on each location). The locations are supplemented according to a following rule. Such locates are where triangles are located as shown in Figure 3-d.

In a case the location with the smallest cost is the location 1, locations 5 and 6 are required to be supplemented and operated.

In a case the location with the smallest cost is the location 2, locations 7 and 8 are required to be supplemented and operated.

In a case the location with the smallest cost is the location 3, locations 5 and 7 are required to be supplemented and operated.

In a case the location with the smallest cost is the location 4, locations 6 and 8 are required to be supplemented and operated.

It is noted that in one embodiment of the present disclosure, the smallest cost is at a half pixel location, and a location that has not been operated and is on left of, on right of, above, or below the target location is then selected. That is, the supplemented location is the location that has not been operated. For example, for the location 1, locations 5, 6 and nl are required to be supplemented. Since location 5 or 6 may be optimal, it may not be necessary to operate the location nl. Therefore, locations 5 and 6 are required to be calculated. In a case that the location 1 is still optimal, the location nl is supplemented. Otherwise, location supplementation is performed according to step 5.

Then, costs of the supplemented locations are compared with location having the smallest cost. In this way, an optimal location is found. In a case that the location corresponding to the smallest cost does not change, one location is supplemented according to step 4, and comparison is further performed. Otherwise, the refreshed location with the smallest-cost is used as a center, and two locations are supplemented according to step 5.

In step 4, one point is first supplemented according to locations shown in Figure 3-d

Namely, in a case that the location with the smallest cost is the location 1, a location nl is required to be supplemented and operated.

In a case that the location with the smallest cost is the location 2, a location n2 is required to be supplemented and operated.

In a case that the location with the smallest cost is the location 3, a location n3 is required to be supplemented and operated.

In a case that the location with the smallest cost is the location 4, a location n4 is required to be supplemented and operated.

When the location is supplemented according to the step 4, the location with the smallest cost is the location 1, 2, 3, or 4, which are all half pixel locations.

Then, the location with the smallest cost serves as a center, and it is determined according to the step 2 which one of four partitions the location belongs to.

In the step 5, two locations are supplemented according to locations as shown in Figure 3-e.

Figure 3-e shows identifiers of supplemental locations in a case that an optimal location obtained through the half pixel estimation is not one of the first four locations. Locations are supplemented so that all four locations that are above, below, on left of, and on right of the target optimal location are calculated. And, it is determined to which partition the target optimal location belongs to, so as to prepare for guiding quarter pixel estimation . The locations to be supplemented depend on which locations are still missing. For example, in a case that the target optimal location is 7, locations above and on right of the location 7 have already been calculated, while locations on left of and below the location 7 are not calculated. Therefore, locations p4 and p5 are supplemented.

In a case that the location with the smallest cost is the location 5, locations p0 and p1 are required to be supplemented and operated, where corresponding coordinates are (-4, -2) and (-2,-4).

In a case that the location with the smallest cost is the location 6, locations p2 and p3 are required to be supplemented and operated, where corresponding coordinates are (2, -4) and (4,-2).

In a case that the location with the smallest cost is the location 7, locations p4 and p5 are required to be supplemented and operated, where corresponding coordinates are (-4, 2) and (-2,4).

In a case that the location with the smallest cost is the location 8, locations p6 and p7 are required to be supplemented and operated, where corresponding coordinates are (2, 4) and (4,2).

The foregoing coordinates are relative to the optimal location obtained through the integer motion estimation, which an original point for the half pixel estimation . A location located above or on left of the original point has a negative coordinate, and a location located below or on right of the original point has a positive coordinate.

Then, the location with the smallest cost serves as a center, and it is determined according to the step 2 which one of four partitions the location belongs to.

All the half pixel estimation may be implemented through a whole loop described in the steps 1 to 5.

Hereinafter QME optimization is performed. Locations of eight surrounding quarter pixels of the optimal location obtained through the half pixel estimation are determined, and are shown as where stars are located in Figure 3-f. The circle represents the optimal location obtained through the half pixel estimation.

It is taken as an example that the optimal location obtained through the half pixel estimation is the central point. For each partition, only three locations are operated during the quarter pixel estimation , in conjunction with an identifier that is obtained in the HME and indicates which partition the optimal location belongs to. When the half pixels are operated, it is predicted which partition an optimal result of the quarter pixel estimation belongs to. Thereby, locations can be supplemented in the predicted partition.

In a case that the optimal location belongs to a 0-th partition, i.e. z0, locations q5, q3, and q1 are required to be operated.

In a case that the optimal location belongs to a 1st partition, i.e. z1, locations q6, q1, and q4 are required to be operated.

In a case that the optimal location belongs to a 2nd partition, i.e. z2, locations q7, q3, and q2 are required to be operated.

In a case that the optimal location belongs to a 3rd partition, i.e. z3, locations q8, q2, and q4 are required to be operated.

Then, comparison is performed. An mv and a cost corresponding to the smallest cost is an optimal mv and an optimal cost. The QME ends.

According to one embodiment of the present disclosure, during inter-frame prediction, a pixel is read at a corresponding location of a reference frame according to the mv. In a case that there is a quarter pixel required to be interpolated, a residue and the like are calculated are finally written into a bit stream. A decoding terminal obtains the mv through decoding, and the pixel is read in a same manner, and interpolation may also need to be performed. Then, a reconstructed image is obtained by adding data of the residue.

According to one embodiment of the present disclosure, repeated interpolation is avoided. Many pixels are superposed during the interpolation. For example, locations 5 and 6 in the half pixels only differ by a column of data, and the remaining parts are identical. During the interpolation, data that has a same size as a target prediction block is interpolated. The larger the block is, the more superposition there are. In addition, the quarter pixels are interpolated based on the half pixels. In an interpolate-and-operate manner, the interpolation is repeatedly performed due to an undetermined location, where the half pixels are first obtained and then quarter pixels are obtained through the interpolation. In one embodiment of the present disclosure, the interpolation is performed once at each location rather than being repeated. In addition, the quarter interpolation is performed based on half pixels that already exist, and two locations have already been operated for the quarter location. Since quarter interpolation is performed on few points, the interpolation may be performed in real time.

It may be learned from the foregoing embodiments that without optimization, half pixel estimation and quarter pixel estimation are both performed on eight locations, the interpolation is performed in real time, and then motion searching is performed. In the solution according to embodiments of the present disclosure, during the half pixel estimation , there is a probability of 35% that four locations are operated, a probability of 40% that seven locations are operated, and a probability of 25% that eight locations are operated. The probabilities for operating four locations, seven locations, and eight locations are calculated by statistics with respect to a case that the optimal locations are obtained through the conventional manner in which eight locations are operated. The case of operating four locations refers to that the process ends after the step 1 in the HME is performed. The case of operating seven locations refers to that the optimal location is the location 1, 2, 3, or 4, and three locations need to be supplemented. The case of eight locations refers to that the step 5 is performed. In calculation for the HME, a calculation amount of 22.5% may be saved. During the quarter pixel estimation , only three locations are operated, and a calculation amount of 62.5% may be saved in calculation. Further given that architecture is adjusted, repeated interpolation is avoided. An overall encoding speed is improved by 32.2%, while a compression performance index (bitrate distortion-rate, bd-rate) is reduced by only 0.24%. Therefore, benefits are prominent.

For better understanding and implementation of the foregoing solutions according to embodiments of the present disclosure, hereinafter corresponding application scenarios are taken as examples for illustration.

It is noted that the foregoing method embodiments are stated as a series of action combinations for concise descriptions. Those skilled in the art should know that the present disclosure is not limited to a sequence of the described actions, because some steps may be performed in another sequence or simultaneously according to an embodiment of the present disclosure. In addition, those skilled in the art should also know that all embodiments described in this specification are exemplary embodiments, and the related actions and modules may not be necessarily required in the present disclosure.

In order to facilitate better implementation of the foregoing solutions according to embodiments of the present disclosure, hereinafter related apparatuses configured to implement the foregoing solutions are further provided.

Referring to Figure 4-a, an apparatus 400 for processing a video image is provided according to an embodiment of the present disclosure. The apparatus 400 may include an image obtaining module 401, an integer pixel estimation module 402, a first fractional-pixel estimation module 403, an image dividing module 404, a first partition obtaining module 405, a second fractional-pixel estimation module 406, and a motion compensation module 407.

The image obtaining module 401 is configured to obtain a target image frame from a to-be-encoded video image.

The integer pixel estimation module 402 is configured to perform integer motion estimation on the target image frame, to obtain an optimal location obtained through the integer pixel estimation.

The first fractional-pixel estimation module 403 is configured to perform half pixel estimation on the optimal location obtained through the integer pixel estimation, to obtain an optimal location obtained through the half pixel estimation .

The image dividing module 404 is configured to divide a peripheral region of the optimal location obtained through the half pixel estimation into four partitions.

The first partition obtaining module 405 is configured to select a first partition for quarter pixel estimation from the four partitions, according to rate distortion costs respectively corresponding to four half pixel locations adjacent to the optimal location obtained through the half pixel estimation.

The second fractional-pixel estimation module 406 is configured to perform quarter pixel estimation in the first partition based on the optimal location obtained through the half pixel estimation , to obtain an optimal location obtained through the quarter pixel estimation.

The motion compensation module 407 is configured to perform motion compensation by using the optimal location obtained through the quarter pixel estimation as a motion estimation result.

In some embodiments of the present disclosure, referring to Figure 4-b, the first fractional-pixel estimation module 403 includes a first half pixel obtaining module 4031, a first cost calculation module 4032, and a first optimal location determining module 4033.

The first half pixel obtaining module 4031 is configured to obtain four half pixel locations adjacent to the optimal location obtained through the integer pixel estimation. The four half pixel locations are four pixel locations that are directly above, directly below, directly on left of, and directly on right of the optimal location obtained through the integer pixel estimation.

The first cost calculation module 4032 is configured to select a location corresponding to a first smallest rate distortion cost, from the optimal location obtained through the integer pixel estimation and the four half pixel locations.

The first optimal location determining module 4033 is configured to determine the optimal location obtained through the half pixel estimation to be the optimal location obtained through the integer pixel estimation, in a case that the location corresponding to the first smallest rate distortion cost is the optimal location obtained through the integer pixel estimation.

Further, in some embodiments of the present disclosure, the first partition obtaining module 405 is specifically configured to divide a peripheral region of the optimal location obtained through the integer pixel estimation into the four partitions, in a case that the location corresponding to the first smallest rate distortion cost is the optimal location obtained through the integer pixel estimation. Each partition includes one of the four half pixel locations.

In some embodiments of the present disclosure, referring to Figure 4-c, the first fractional-pixel estimation module 403 includes a first half pixel obtaining module 4031, a first cost calculation module 4032, a second half pixel obtaining module 4034, a second cost calculation module 4035, and a second optimal location determining module 4036.

The first half pixel obtaining module 4031 is configured to obtain four half pixel locations adjacent to the optimal location obtained through the integer pixel estimation. The four half pixel locations are four pixel locations that are directly above, directly below, directly on left of, and directly on right of the optimal location obtained through the integer pixel estimation.

The first cost calculation module 4032 is configured to select a location corresponding to a first smallest rate distortion cost, from the optimal location obtained through the integer pixel estimation and the four half pixel locations.

The second half pixel obtaining module 4034 is configured to obtain two half pixel locations adjacent to a first half pixel location, in a case that the location corresponding to the first smallest rate distortion cost is the first half pixel location. The two half pixel locations adjacent to the first half pixel location and the first half pixel location are located along a same axial direction, and the first half pixel location is a half pixel location with a smallest rate distortion cost among the four half pixel locations.

The second cost calculation module 4035 is configured to select a location corresponding to a second smallest rate distortion cost, from the first half pixel location and the two half pixel locations adjacent to the first half pixel location.

The second optimal location determining module 4036 is configured to: determine the optimal location obtained through the half pixel estimation to be the first half pixel location, in a case that the location corresponding to the second smallest rate distortion cost is the first half pixel location; or determine the optimal location obtained through the half pixel estimation to be a third half pixel location, in a case that the location corresponding to the second smallest rate distortion cost is the third half pixel location. The third half pixel location is a half pixel location with a smaller rate distortion cost among the two half pixel locations adjacent to the first half pixel location.

Further, in some embodiments of the present disclosure, referring to Figure 4-d, the first partition obtaining module 405 includes a third half pixel obtaining module 4051 and a first region division module 4052.

The third half pixel obtaining module 4051 is configured to obtain a second half pixel location adjacent to the first half pixel location, in a case that the location corresponding to the second smallest rate distortion cost is the first half pixel location. The second half pixel location is a pixel location on which no half interpolation has been performed, among four pixel locations that are directly above, directly below, directly on left of, and directly on right of the first half pixel location.

The first region division module 4052 is configured to divide a peripheral region of the first half pixel location into the four partitions. Each partition includes one of following four locations: the optimal location obtained through the integer pixel estimation, the two half pixel locations adjacent to the first half pixel location, and the second half pixel location.

In some embodiments of the present disclosure, referring to Figure 4-e, the first partition obtaining module 405 includes a fourth half pixel obtaining module 4053 and a second region division module 4054.

The fourth half pixel obtaining module 4053 is configured to obtain two fourth half pixel locations adjacent to the third half pixel location, in a case that the location corresponding to the second smallest rate distortion cost is the third half pixel location. The two fourth half pixel locations are pixel locations on which no interpolation have been performed, among four pixel locations that are directly above, directly below, directly on left of, and directly on right of the third half pixel location.

The second region division module 4054 is configured to divide a peripheral region of the third half pixel location into the four partitions. Each partition includes one of following four locations: two of the four half pixel locations that are adjacent to the third half pixel location, and the two fourth half pixel locations.

In some embodiments of the present disclosure, referring to Figure 4-f, the second fractional-pixel estimation module 406 includes a quarter interpolation module 4061, a third cost calculation module 4062, and a third optimal location determining module 4063.

The quarter interpolation module 4061 is configured to perform quarter interpolation at three surrounding locations in the first partition, based on the optimal location obtained through the half pixel estimation , to obtain three quarter pixel locations adjacent to the optimal location obtained through the half pixel estimation . The three quarter pixel locations are located in the first partition.

The third cost calculation module 4062 is configured to select a location corresponding to a third smallest rate distortion cost, from the optimal location obtained through the half pixel estimation and the three quarter pixel locations.

The third optimal location determining module 4063 is configured to determine the location corresponding to the third smallest rate distortion cost to be the optimal location obtained through the quarter pixel estimation.

It can be learned from description of the foregoing embodiments of the present disclosure that the quarter pixel estimation in the embodiments of the present disclosure is completed in the first partition according to the optimal location obtained through the half pixel estimation , and the first partition is a partition to which a location corresponding to the smallest rate distortion cost belongs. Therefore, it is not necessary to perform the quarter interpolation in all regions during the quarter pixel estimation , and it is not necessary to calculate a smallest rate distortion cost of each quarter pixel location in all the regions. Rather, the smallest rate distortion cost is merely required to be calculated for the quarter pixel locations in the first partition. Therefore, an encoding speed can be effectively improved and calculation complexity can be reduced while ensuring video compression performance, and thereby a requirement of real-time encoding on machine performances is lowered in video compression.

Figure 5 is a schematic structural diagram of a server according to an embodiment of the present disclosure. The server 1100 may vary greatly due to different configurations or performances. The server 1100 may include one or more central processing units (CPU) 1122 (for example, one or more processors), a memory 1132, and one or more storage media 1130 (for example, one or more mass storage devices) that store an application program 1142 or data 1144. The memory 1132 and the storage medium 1130 may be a transient storage or a persistent storage. The program stored in the storage medium 1130 may include one or more modules (which is not shown in the figure), and each module may include a series of instruction and operations for the server. Furthermore, the central processing unit 1122 may be configured to communicate with the storage medium 1130, and execute on the server 1100 a series of instructions and operations in the storage medium 1130.

The server 1100 may further include one or more power supplies 1126, one or more wired or wireless network interfaces 1150, one or more input/output interfaces 1158, and/or one or more operating systems 1141, such as Windows ServerTM, Mac OS XTM, UnixTM, LinuxTM, or FreeBSDTM.

Steps of the method for processing video image performed by the server in the foregoing embodiments may be based on the server structure shown in Figure 5.

Additionally, a storage medium is further provided according to an embodiment of the present disclosure. The storage medium is configured to store a program code, and the program code is used to perform the method according to the foregoing embodiments.

A computer program product including instructions is further provided according to an embodiment of the present disclosure further. The computer program product when run on a server configures the server to perform the method according to the foregoing embodiments.

In addition, it should be noted that the apparatus embodiments described above are merely exemplary. The units described as separate parts may or may not be physically separated, and parts displayed as units may or may not be physical units. Namely, the units may be located in one position, or may be distributed among multiple network units. Some or all modules thereof may be selected based on an actual requirement, to implement an objective of the solution according to one embodiment. In addition, in the accompanying drawings of the apparatus embodiments provided in the present disclosure, connection relationships between modules indicate that the modules have communication connections with each other, which may be specifically implemented as one or more communications buses or signal cables. Those skilled in the art may understand and implement the objective without creative efforts.

Based on the description of the foregoing implementation manners, those skilled in the art may clearly understand that the present disclosure may be implemented by software in conjunction with necessary universal hardware, and may also be implemented by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be of various forms, such as an analog circuit, a digital circuit, or a dedicated circuit. For the present disclosure, software program implementation may be a better implementation manner in most cases. Based on such understanding, an essence or a part contributing to the existing technology in the technical solutions of the present disclosure may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer. The software product includes several instructions for instructing a computer device (which may be a personal computer, a server, a network device, and the like) to perform the methods described in the embodiments of the present disclosure.

As described above, the above embodiments are only intended to describe the technical solutions of the present disclosure, and not to limit the present disclosure. Although the present disclosure is described in detail with reference to the above embodiments, those skilled in the art should understand that, modifications can be made to the technical solutions recorded in the above embodiments, or equivalent replacements can be made to some of the technical features thereof, and the modifications and the replacements will not make the corresponding technical solutions deviate from the spirit and the scope of the technical solutions of the embodiments of the present disclosure.

## Claims

1. A method for processing a video image, applied to a device for processing video, the method comprising:
obtaining a target image frame from a to-be-encoded video image;
performing integer motion estimation on the target image frame, to obtain an optimal location obtained through the integer pixel estimation;
performing half pixel estimation on the optimal location obtained through the integer pixel estimation, to obtain an optimal location obtained through the half pixel estimation;
dividing a peripheral region of the optimal location obtained through the half pixel estimation into four partitions;
selecting a first partition for quarter pixel estimation from the four partitions, according to rate distortion costs respectively corresponding to four half pixel locations adjacent to the optimal location obtained through the half pixel estimation;
performing quarter pixel estimation in the first partition based on the optimal location obtained through the half pixel estimation, to obtain an optimal location obtained through the quarter pixel estimation; and
performing motion compensation by using the optimal location obtained through the quarter pixel estimation as a motion estimation result.

2. The method according to claim 1, wherein performing the half pixel estimation on the optimal location obtained through the integer pixel estimation to obtain the optimal location obtained through the half pixel estimation comprises:
obtaining four half pixel locations adjacent to the optimal location obtained through the integer pixel estimation, wherein the four half pixel locations are four pixel locations that are directly above, directly below, directly on left of, and directly on right of the optimal location obtained through the integer pixel estimation;
selecting a location corresponding to a first smallest rate distortion cost, from the optimal location obtained through the integer pixel estimation and the four half pixel locations; and
determining the optimal location obtained through the half pixel estimation to be the optimal location obtained through the integer pixel estimation, in a case that the location corresponding to the first smallest rate distortion cost is the optimal location obtained through the integer pixel estimation.

3. The method according to claim 2, wherein dividing the peripheral region of the optimal location obtained through the half pixel estimation into the four partitions comprises:
dividing a peripheral region of the optimal location obtained through the integer pixel estimation into the four partitions, in a case that the location corresponding to the first smallest rate distortion cost is the optimal location obtained through the integer pixel estimation;
wherein each of the four partitions is obtained from an area defined based on the optimal location obtained through the integer pixel estimation and two of the four half pixel locations.

4. The method according to claim 1, wherein performing the half pixel estimation on the optimal location obtained through the integer pixel estimation to obtain the optimal location obtained through the half pixel estimation comprises:
obtaining four half pixel locations adjacent to the optimal location obtained through the integer pixel estimation, wherein the four half pixel locations are four pixel locations that are directly above, directly below, directly on left of, and directly on right of the optimal location obtained through the integer pixel estimation;
selecting a location corresponding to a first smallest rate distortion cost, from the optimal location obtained through the integer pixel estimation and the four half pixel locations;
obtaining two half pixel locations adjacent to a first half pixel location, in a case that the location corresponding to the first smallest rate distortion cost is the first half pixel location, wherein the two half pixel locations adjacent to the first half pixel location and the first half pixel location are located along a same axial direction, and the first half pixel location is a half pixel location with a smallest rate distortion cost in the four half pixel locations;
selecting a location corresponding to a second smallest rate distortion cost, from the first half pixel location and the two half pixel locations adjacent to the first half pixel location; and
determining the optimal location obtained through the half pixel estimation to be the first half pixel location, in a case that the location corresponding to the second smallest rate distortion cost is the first half pixel location.

5. The method according to claim 1, wherein performing the half pixel estimation on the optimal location obtained through the integer pixel estimation to obtain the optimal location obtained through the half pixel estimation comprises:
obtaining four half pixel locations adjacent to the optimal location obtained through the integer pixel estimation, wherein the four half pixel locations are four pixel locations that are directly above, directly below, directly on left of, and directly on right of the optimal location obtained through the integer pixel estimation;
selecting a location corresponding to a first smallest rate distortion cost, from the optimal location obtained through the integer pixel estimation and the four half pixel locations;
obtaining two half pixel locations adjacent to a first half pixel location, in a case that the location corresponding to the first smallest rate distortion cost is the first half pixel location, wherein the two half pixel locations adjacent to the first half pixel location and the first half pixel location are located along a same axial direction, and the first half pixel location is a half pixel location with a smallest rate distortion cost in the four half pixel locations;
selecting a location corresponding to a second smallest rate distortion cost, from the first half pixel location and the two half pixel locations adjacent to the first half pixel location; and
determining the optimal location obtained through the half pixel estimation to be a third half pixel location, in a case that the location corresponding to the second smallest rate distortion cost is the third half pixel location, wherein the third half pixel location is a half pixel location with a smaller rate distortion cost among the two half pixel locations adjacent to the first half pixel location.

6. The method according to claim 4, wherein dividing the peripheral region of the optimal location obtained through the half pixel estimation into the four partitions comprises:
obtaining a second half pixel location adjacent to the first half pixel location, in a case that the location corresponding to the second smallest rate distortion cost is the first half pixel location, wherein the second half pixel location is a pixel location on which no half interpolation has been performed, among four pixel locations that are directly above, directly below, directly on left of, and directly on right of the first half pixel location; and
dividing a peripheral region of the first half pixel location into the four partitions, wherein each of the four partitions is obtained from an area divided based on the first half pixel location, the optimal location obtained through the integer pixel estimation, the two half pixel locations adjacent to the first half pixel location, and the second half pixel location.

7. The method according to claim 5, wherein dividing the peripheral region of the optimal location obtained through the half pixel estimation into the four partitions comprises:
obtaining two fourth half pixel locations adjacent to the third half pixel location, in a case that the location corresponding to the second smallest rate distortion cost is the third half pixel location, wherein the two fourth half pixel locations are pixel locations on which no interpolation have been performed, among four pixel locations that are directly above, directly below, directly on left of, and directly on right of the third half pixel location; and
dividing a peripheral region of the third half pixel location into the four partitions, wherein each of the four partitions is obtained from an area divided based on the third half pixel location, two of four half pixel locations that are adjacent to the third half pixel location, and the two fourth half pixel locations.

8. The method according to any one of claims 1 to 7, wherein performing the quarter pixel estimation in the first partition based on the optimal location obtained through the half pixel estimation to obtain the optimal location obtained through the quarter pixel estimation comprises:
performing quarter interpolation at three surrounding locations in the first partition, based on the optimal location obtained through the half pixel estimation, to obtain three quarter pixel locations adjacent to the optimal location obtained through the half pixel estimation, wherein the three quarter pixel locations are located in the first partition;
selecting a location corresponding to a third smallest rate distortion cost, from the optimal location obtained through the half pixel estimation and the three quarter pixel locations; and
determining the location corresponding to the third smallest rate distortion cost to be the optimal location obtained through the quarter pixel estimation.

9. An apparatus for processing a video image, comprising:
an image obtaining module, configured to obtain a target image frame from a to-be-encoded video image;
an integer pixel estimation module, configured to perform integer motion estimation on the target image frame, to obtain an optimal location obtained through the integer pixel estimation;
a first fractional-pixel estimation module, configured to perform half pixel estimation on the optimal location obtained through the integer pixel estimation, to obtain an optimal location obtained through the half pixel estimation;
an image dividing module, configured to divide a peripheral region of the optimal location obtained through the half pixel estimation into four partitions, wherein each of the four partitions comprises two quarter pixel locations obtained through quarter interpolation;
a first partition obtaining module, configured to obtain a location corresponding to a smallest rate distortion cost from half pixel locations in the four partitions, and determine one of the four partitions to which the location corresponding to the smallest rate distortion cost belongs to be a first partition;
a second fractional-pixel estimation module, configured to perform quarter pixel estimation in the first partition based on the optimal location obtained through the half pixel estimation, to obtain an optimal location obtained through the quarter pixel estimation; and
a motion compensation module, configured to perform motion compensation by using the optimal location obtained through the quarter pixel estimation as a motion estimation result.

10. The apparatus according to claim 9, wherein the first fractional-pixel estimation module comprises:
a first half pixel obtaining module, configured to obtain four half pixel locations adjacent to the optimal location obtained through the integer pixel estimation, wherein the four half pixel locations are four pixel locations that are directly above, directly below, directly on left of, and directly on right of the optimal location obtained through the integer pixel estimation;
a first cost calculation module, configured to select a location corresponding to a first smallest rate distortion cost, from the optimal location obtained through the integer pixel estimation and the four half pixel locations; and
a first optimal location determining module, configured to determine the optimal location obtained through the half pixel estimation to be the optimal location obtained through the integer pixel estimation, in a case that the location corresponding to the first smallest rate distortion cost is the optimal location obtained through the integer pixel estimation.

11. The apparatus according to claim 10, wherein the first partition obtaining module is configured to:
divide a peripheral region of the optimal location obtained through the integer pixel estimation into four partitions, in a case that the location corresponding to the first smallest rate distortion cost is the optimal location obtained through the integer pixel estimation,
wherein each of the four partitions is obtained from an area defined based on the optimal location obtained through the integer pixel estimation and two of the four half pixel locations.

12. The apparatus according to claim 9, wherein the first fractional-pixel estimation module comprises:
a first half pixel obtaining module, configured to obtain four half pixel locations adjacent to the optimal location obtained through the integer pixel estimation, wherein the four half pixel locations are four pixel locations that are directly above, directly below, directly on left of, and directly on right of the optimal location obtained through the integer pixel estimation;
a first cost calculation module, configured to select a location corresponding to a first smallest rate distortion cost, from the optimal location obtained through the integer pixel estimation and the four half pixel locations; and
a second half pixel obtaining module, configured to obtain two half pixel locations adjacent to a first half pixel location, in a case that the location corresponding to the first smallest rate distortion cost is the first half pixel location, wherein the two half pixel locations adjacent to the first half pixel location and the first half pixel location are located along a same axial direction, and the first half pixel location is a half pixel location with a smallest rate distortion cost among the four half pixel locations;
a second cost calculation module, configured to select a location corresponding to a second smallest rate distortion cost, from the first half pixel location and the two half pixel locations adjacent to the first half pixel location; and
a second optimal location determining module, configured to determine the optimal location obtained through the half pixel estimation to be the first half pixel location, in a case that the location corresponding to the second smallest rate distortion cost is the first half pixel location.

13. The apparatus according to claim 9, wherein the first fractional-pixel estimation module comprises:
a first half pixel obtaining module, configured to obtain four half pixel locations adjacent to the optimal location obtained through the integer pixel estimation, wherein the four half pixel locations are four pixel locations that are directly above, directly below, directly on left of, and directly on right of the optimal location obtained through the integer pixel estimation;
a first cost calculation module, configured to select a location corresponding to a first smallest rate distortion cost, from the optimal location obtained through the integer pixel estimation and the four half pixel locations; and
a second half pixel obtaining module, configured to obtain two half pixel locations adjacent to a first half pixel location, in a case that the location corresponding to the first smallest rate distortion cost is the first half pixel location, wherein the two half pixel locations adjacent to the first half pixel location and the first half pixel location are located along a same axial direction, and the first half pixel location is a half pixel location with a smallest rate distortion cost among the four half pixel locations;
a second cost calculation module, configured to select a location corresponding to a second smallest rate distortion cost, from the first half pixel location and the two half pixel locations adjacent to the first half pixel location; and
a second optimal location determining module, configured to determine the optimal location obtained through the half pixel estimation to be a third half pixel location, in a case that the location corresponding to the second smallest rate distortion cost is the third half pixel location, wherein the third half pixel location is a half pixel location with a smaller rate distortion cost among the two half pixel locations adjacent to the first half pixel location.

14. The apparatus according to claim 12, wherein the first partition obtaining module comprises:
a third half pixel obtaining module, configured to obtain a second half pixel location adjacent to the first half pixel location, in a case that the location corresponding to the second smallest rate distortion cost is the first half pixel location, wherein the second half pixel location is a pixel location on which no half interpolation has been performed, among four pixel locations that are directly above, directly below, directly on left of, and directly on right of the first half pixel location; and
a first region division module, configured to divide a peripheral region of the first half pixel location into the four partitions, wherein each of the four partitions is obtained from an area divided based on the first half pixel location, the optimal location obtained through the integer pixel estimation, the two half pixel locations adjacent to the first half pixel location, and the second half pixel location.

15. The apparatus according to claim 12, wherein the first partition obtaining module comprises:
a fourth half pixel obtaining module, configured to obtain two fourth half pixel locations adjacent to the third half pixel location, in a case that the location corresponding to the second smallest rate distortion cost is the third half pixel location, wherein the two fourth half pixel locations are pixel locations on which no interpolation have been performed, among four pixel locations that are directly above, directly below, directly on left of, and directly on right of the third half pixel location; and
a second region division module, configured to divide a peripheral region of the third half pixel location into the four partitions, wherein each of the four partitions is obtained from an area divided based on the third half pixel location, two of four half pixel locations that are adjacent to the third half pixel location, and the two fourth half pixel locations.

16. The apparatus according to any one of claims 9 to 15, wherein the second fractional-pixel estimation module comprises:
a quarter interpolation module, configured to perform quarter interpolation at three surrounding locations in the first partition, based on the optimal location obtained through the half pixel estimation, to obtain three quarter pixel locations adjacent to the optimal location obtained through the half pixel estimation, wherein the three quarter pixel locations are located in the first partition;
a third cost calculation module, configured to select a location corresponding to a third smallest rate distortion cost, from the optimal location obtained through the half pixel estimation and the three quarter pixel locations; and
a third optimal location determining module, configured to determine the location corresponding to the third smallest rate distortion cost to be the optimal location obtained through the quarter pixel estimation.

17. A video processing device, comprising:
a processor,
a communications interface,
a memory, and
a communications bus,
wherein the processor, the communications interface, and the memory communicate with each other through the communications bus, and the communications interface is an interface of a communications module;
wherein the memory is configured to store a program code and transmit the program code to the processor; and
wherein the processor is configured to call an instruction of the program code in the memory to perform the method according to any one of claims 1 to 8.

18. A storage medium, configured to store a program code, wherein the program code is for performing the method according to any one of claims 1 to 8.

19. A computer program product comprising instructions, wherein the computer program product when run on a computer configures the computer to perform the method according to any one of claims 1 to 8.
